Europäisches Patentamt

European Patent Office

Office européen des brevets

(19)

(11) Publication number: **0 013 176**
**B2**

(12) NEW EUROPEAN PATENT SPECIFICATION

(45) Date of publication of the new patent specification: **15.06.88**

(51) Int. Cl.⁴: **C 07 C 85/06, C 07 C 87/06**

(21) Application number: **79303055.2**

(22) Date of filing: **28.12.79**

(54) Synthesis of lower alkyl amines.

(30) Priority: **29.12.78 US 974644**

(43) Date of publication of application:
**09.07.80 Bulletin 80/14**

(45) Publication of the grant of the patent:
**13.04.83 Bulletin 83/15**

(45) Mention of the opposition decision:
**15.06.88 Bulletin 88/24**

(84) Designated Contracting States:
**BE DE FR GB IT NL SE**

(56) References cited:
**DE-A-1 817 691**
**GB-A- 679 712**
**US-A-2 365 721**
**US-A-4 014 933**

**CHEMICAL ABSTRACTS, vol. 59, no. 2, July 22, 1963, column 1465d,e Columbus, Ohio, U.S.A.**
**T. AONUMA "Synthesis of ethylamines from ethyl alcohol and ammonia".**

(73) Proprietor: **AIR PRODUCTS AND CHEMICALS, INC.**
**P.O. Box 538**
**Allentown, Pennsylvania 18105 (US)**

(72) Inventor: **Fowlkes, Robert Lee**
**220 Cedar Street**
**Milton, Florida 32570 (US)**
Inventor: **Martinez de Pinillos, Joaquin Victor**
**170 Pine Grove Circle**
**Wescosville, Pennsylvania 18106 (US)**

(74) Representative: **Lucas, Brian Ronald**
**Lucas, George & Co. 135 Westhall Road**
**Warlingham Surrey CR3 9HJ (GB)**

# 0 013 176

**Description**

This invention relates to a gas phase process for producing lower alkylamines and, more particularly but not exclusively, is concerned with a process for producing ethyl, n-propyl, isopropyl, n-butyl and isobutylamine.

It has been proposed to produce amines by reacting a gaseous alcohol with ammonia at a temperature of from 177°C to 260°C in the presence of hydrogen and a catalyst comprising a Group 8 metal carried on an alumina support. One of the difficulties associated with this process is that the catalyst readily becomes coated with carbon and is thus inhibited. We believe that the source of this carbon is the hydrocarbon which is produced as a by product and the problem was to reduce the amount of hydrocarbon produced whilst maintaining an acceptable conversion.

This invention provides a process for producing an amine by reacting an alkanol with ammonia at a temperature of from 177°C to 260°C in the presence of hydrogen and a catalyst comprising a Group 8 metal on a support, characterized in that:

a) the process is conducted in the gas phase;

b) a $C_1$ to $C_4$ monoalkanol is reacted to give a lower alkylamine;

c) from 2 to 20 moles of ammonia and from 0.25 to 4 moles of hydrogen are present per mole of alkanol;

d) the catalyst is cobalt or nickel carried on an alumina support; and

e) the support has been rendered neutral or substantially neutral by the incorporation therein of a basic material comprising an alkaline earth metal.

Preferably, the alkaline earth metal is calcium, barium, magnesium or mixtures thereof.

Suitable basic materials are the hydroxides of calcium or barium and the salts thereof.

Preferably, the support should have a pH from 6.5 to 7.5.

In addition to neutralising or substantially neutralising the support it also appears to us that the relative amounts of ammonia, alkanol and hydrogen are important and whereas the general ratio of 2—20/1/0.25—4 (by moles) should give reasonable results it may be found more beneficial to operate in the range 10—16/1/0.25—1 more particularly, but not exclusively, in the conversion of ethanol to amonoethylamine.

Preferably, the gas hourly space velocity (GHSV) is maintained between 500 and 5000 volumes of reactant per volume of catalyst per hour with preferred GHSV's being from 1000 to 3000 volumes of reactant per volume of catalyst per hour.

The supported catalyst can conveniently be made by mixing ammonium hydroxide with an acidic solution of aluminium chloride, a slurry of barium hydroxide and a nickel salt. The gel which forms is separated from the liquid and is calcined at 1000 to 1200°F (538—649°C) for a period of four hours.

GB—A—679,712 discloses a process for producing amines by reacting lower alkanols with ammonia and hydrogen in the presence of an unsupported foraminate catalyst such as nickel/aluminium, nickel/silicon, cobalt/aluminium, and cobalt/silicon. The catalyst is treated by simply soaking in a soluble alkaline earth basic compound. The method can be applied when a foraminate catalyst prepared from aluminium alloys contains some alumina as an impurity remaining after caustic extraction.

Chemical Abstracts Volume 59, Number 2, July 22, 1963, Column 1465 d,e shows the liquid phase ammonolysis of lower alkanols with ammonia and hydrogen in the presence of nickel/alumina catalysts.

US—A—4 014 933 Boettger, discloses a process for producing an amine by reacting an alcohol and ammonia in the presence of hydrogen and a catalyst comprising a group 8 metal on a support. However, the process is carried out in the liquid phase, the first reactant is preferably a diol or alkanolamine, the second reactant may be a primary or secondary amine, the carrier may be silicon dioxide or acidic alumina and the main component of the catalyst comprises three metals, i.e. cobalt, nickel and copper. There are no directions to select the particular ingredients now incorporated into an alumina support and the particular reactants and conditions to obtain high yields of lower alkylamine whilst reducing the hydrocarbon content in the reaction mixture.

The following Examples are provided to compare preferred embodiments of the present invention with the prior art and are not intended to restrict the scope of the present invention.

## Example 1

The conversion of ethanol to monoethylamine by reaction with ammonia in the presence of hydrogen was effected in a laboratory reactor at a temperature of 216°C and a pressure of 17 bars gauge. The volume of catalyst in the laboratory reactor was 100 cubic cm of a Girdler-62RS cobalt catalyst. "Girdler" is a registered Trade Mark. This catalyst contained approximately 34% cobalt supported on a neutralised alumina substrate. The surface area in meters squared per gram was approximately 42 with a DWL crush strength of 6.8 Kg. The bulk density was approximately 50 plus or minus 5 pounds per cubic foot.

Table 1 shows the results of the ammonolysis with variations in reaction conditions. The heading (N/R/H) refers to the ratio of ammonia to ethanol to hydrogen on a molar basis and the heading (GHSV) refers to the gas hourly space velocity. The percent conversion is related to the amount of monoethylamine produced based on the ethanol charged and the remaining figures refer to the molar yield (in percent) of monoethylamine (MEA), diethylamine (DEA), triethylamine (TEA), acetonitrile (ACN), mono n-butylamine (MNBA), and the hydrocarbon content (HC).

2

TABLE 1

Ethylamines from ethanol
Molar yield

| N/R/H | GHSV | % Conv. | MEA | DEA | TEA | ACN | MNBA | HC |
|---|---|---|---|---|---|---|---|---|
| 2/1/1 | 1000 | 88.03 | 46.79 | 44.27 | 6.73 | 0.06 | 2.15 | 5.78 |
| 2/1/1 | 2000 | 82.01 | 50.73 | 39.10 | 10.01 | 0.16 | 0 | 1.64 |
| 2/1/1 | 3000 | 69.96 | 55.97 | 38.25 | 5.21 | 5.21 | 0.53 | — |
| 4/1/1 | 1000 | 95.98 | 52.43 | 40.47 | 6.86 | 0.03 | 0.21 | 2.67 |
| 4/1/1 | 2000 | 76.22 | 72.57 | 23.24 | 3.03 | 1.01 | 0.09 | 2.50 |
| 4/1/1 | 3000 | 72.47 | 68.64 | 27.17 | 2.01 | 0.22 | 0.43 | 3.01 |
| 8/1/1 | 1000 | 82.69 | 76.55 | 17.84 | 0 | 5.60 | 0 | — |
| 8/1/1 | 2000 | 72.87 | 72.97 | 10.68 | 2.76 | 13.32 | 0 | 2.72 |
| 8/1/1 | 3000 | 61.69 | 79.16 | 14.51 | 0 | 6.34 | 0 | 3.01 |
| 10/1/1 | 1000 | 77.48 | 58.95 | 36.74 | 5.21 | 0.41 | 0 | — |
| 10/1/1 | 2000 | 72.45 | 75.33 | 17.47 | 1.51 | 0.54 | 0 | — |
| 10/1/1 | 3000 | 66.19 | 67.29 | 17.48 | 7.32 | 7.55 | 0.36 | — |
| 16/1/1 | 1000 | 81.13 | 69.63 | 4.65 | 1.16 | 15.82 | 3.31 | — |
| 16/1/1 | 2000 | 73.97 | 57.22 | 8.43 | 17.17 | 12.56 | 4.61 | — |
| 16/1/1 | 3000 | 81.39 | 61.36 | 0.85 | 0 | 34.51 | 3.27 | — |
| 4/1/2 | 1000 | 87.90 | 28.05 | 59.46 | 11.55 | 0 | 0.94 | 7.10 |
| 4/1/0.5 | 1000 | 58.52 | 81.19 | 16.37 | 1.25 | 0 | 1.20 | — |
| 4/1/0.25 | 1000 | 54.72 | 71.93 | 21.29 | 2.55 | 1.15 | 3.10 | 1.55 |
| 2/1/1 | 1000 | 71.80 | 78.85 | 10.84 | 0 | 10.10 | 0.21 | — |
| 4/1/1 | 1000 | 83.54 | 50.85 | 41.79 | 7.36 | 0 | 0 | 3.29 |
| 8/1/1 | 1000 | 65.28 | 64.47 | 25.73 | 8.01 | 0 | 0.21 | 3.74 |

The results in Table 1 show that good conversion to amines was obtained with very little to practically no hydrocarbon being produced particularly where the molar ratio of ammonia to ethanol to hydrogen ranged from 10—16/1/1. On the other hand, the percent conversion increased slightly with increasing molar concentration of ammonia and the concentration of monoethylamine on a molar basis, increased as compared to runs made at lower ammonia to ethanol to hydrogen ratios. It is important to note that as the molar concentration of ammonia to ethanol to hydrogen increased to about 16/1/1, the concentration of byproduct acetonitrile increased substantially and, for these reasons, it would seem that the better results were obtained at a level of about 8—10/1/1.

Table 1 also shows as the hydrogen concentration increased above a 1:1 to that of ethanol, a higher concentration of hydrocarbon was produced. On the other hand, as the ratio of alkanol to hydrogen increased above 1, e.g. 1/0.5 and 1/0.25, the hydrocarbon content was reduced. Although the data does not specifically show results, it is anticipated that if the ratio of ammonia to ethanol ranged from about 4—10 to 1, and the ratio of hydrogen to ethanol was greater than 1, higher concentrations of monoethylamine would be produced.

Example 2

The procedure of Example 1 was repeated with various nickel catalysts supported on silica and silica-alumina supports as taught in the prior art. The ratio of ammonia to ethanol to hydrogen was 4/1/1 and the reaction temperature was 216°C. Table 2 below represents the results for various proprietary nickel catalysts all of which are sold by the Harshaw Chemical Co.

Table 2

| Catalyst | % Molar conv. | N/R/H | GHSV | T°F | Yield Mole % | | | | | | | HC |
| | | | | | MEA | DEA | TEA | ACN | Et$_2$O | MNBA | CO$_2$ | |
| --- | --- | --- | --- | --- | --- | --- | --- | --- | --- | --- | --- | --- |
| Ni—3210T | 64.9 | 4/1/1 | 1000 | 420 | 44.0 | 33.2 | 4.47 | 0.80 | ND | 0.20 | 0.22 | 17.13 |
| Ni—0148T | 41.2 | 4/1/1 | 1000 | 420 | 43.4 | 44.3 | 10.9 | 0.50 | ND | 0.12 | 0.05 | 0.78 |
| Ni—3266E | 84.5 | 4/1/1 | 1000 | 420 | 27.1 | 32.3 | 6.43 | ND | ND | ND | X's = 33.6 | |
| Ni—0104T | 87.8 | 4/1/1 | 1000 | 420 | 41.4 | 42.6 | 5.50 | 0.93 | ND | 2.18 | 0.90 | 6.52 |
| Nix649—93T | 85.7 | 4/1/1 | 1000 | 420 | 29.7 | 45.5 | 17.2 | 0.19 | ND | ND | 0.04 | 8.34 |

ND=Non-detectable

**0 013 176**

The results of Table 2 shows that many nickel catalysts utilized in the prior art for the production of monoethylamine resulted in substantially lower quantities of monoethylamine as compared to the monoethylamine content prepared by the catalyst having a neutral alumina support. It should also be noted that with one exception, where the molar conversion was unacceptable, the hydrocarbon content in the reaction mixture generally was substantially higher than that in Example 1.

### Claims

1. A process for producing a lower alkylamine by reacting an alkanol with ammonia at a temperature of from 177°C to 260°C in the presence of hydrogen and a catalyst comprising a Group 8 metal on a support, characterized in that:
a) the process is conducted in the gas phase;
b) a $C_1$ to $C_4$ monoalkanol is reacted to give a lower alkylamine;
c) from 2 to 20 moles of ammonia and from 0.25 to 4 moles of hydrogen are present per mole of alkanol;
d) the catalyst is cobalt or nickel carried on an alumina support; and
e) the support has been rendered neutral or substantially neutral by the incorporation therein of a basic material comprising an alkaline earth metal.

2. A process according to Claim 1, characterized in that said alkaline earth metal is calcium, barium, magnesium or mixtures thereof.

3. A process according to Claim 1 or 2, characterized in that said basic material is the hydroxide of calcium or barium or a salt thereof.

4. A process according to Claim 1, 2 or 3, characterized in that said support has a pH of from 6.5 to 7.5.

5. A process according to any one of the preceding claims, characterized in that the ratio of ammonia/alkanol/hydrogen is 10—16/1/0.25—1.

6. A process as claimed in any one of Claims 1 to 4, wherein the molar ratio of ammonia to alkanol is from 8:1 to 10:1.

### Patentansprüche

1. Verfahren zur Herstellung eines Nieder-Alkylamins durch Reaktion eines Alkanols mit Ammoniak bei einer Temperatur von 177°C bis 260°C in Gegenwart von Wasserstoff und einem Katalysator, der auf einem Träger ein Metall der Gruppe 8 umfaßt, dadurch gekennzeichnet:
a) dieses Verfahren in der Gasphase durchgeführt wird,
b) man ein $C_1$ bis $C_4$-Monoalkanol reagieren läßt, um das Nieder-Alkylamin zu ergeben,
c) von 2 bis 20 Mol Ammoniak und 0,25 bis 4 Mol Wasserstoff pro Mol Alkanol zugegen sind,
d) der Katalysator Kobalt oder Nickel ist, das auf einem Aluminiumoxidträger enthalten ist und
e) dieser Träger neutral oder im wesentlichen neutral gemacht wurde, indem ein Erdalkalimetall umfassendes basisches Material darin eingearbeitet wurde.

2. Verfahren nach Anspruch 1 dadurch gekennzeichnet, daß das Erdalkalimetall Kalzium, Barium, Magnesium oder Mischungen davon ist.

3. Verfahren nach Anspruch 1 oder 2, dadurch gekennzeichnet, daß das basische Material, das Hydroxid von Kalzium oder Barium oder ein Salz davon ist.

4. Verfahren nach Anspruch 1, 2 oder 3 dadurch gekennzeichnet, daß der Träger einen pH-Wert von 6,5 bis 7,5 aufweist.

5. Verfahren nach einem der vorstehenden Ansprüche, dadurch gekennzeichnet, daß das Verhältnis von Ammoniak/Alkanol/Wasserstoff 10—16/1/0,25—1 beträgt.

6. Verfahren nach einem der Ansprüche 1 bis 4, worin das Molverhältnis von Ammoniak zu Alkanol von 8:1 bis 10:1 beträgt.

### Revendications

1. Procédé pour produire une alcoylamine inférieure par réaction d'un alcanol avec de l'ammoniac à une température allant de 177°C à 260°C en présence d'hydrogène et d'un catalyseur comprenant un métal du groupe 8 sur un support, caractérisé en ce que:
a) le procédé est conduit en phase gazeuse;
b) un mono-alcanol en $C_1$ à $C_4$ est mis en réaction pour fournir une alcoylamine inférieure;
c) de 2 à 20 moles d'ammoniac et de 0,25 à 4 moles d'hydrogène sont présentes par mole d'alcanol;
d) le catalyseur est du cobalt ou du nickel porté sur un support d'alumine; et
e) le support a été neutralisé ou pratiquement neutralisé par incorporation dans celui-ci d'une matière basique comprenant un métal alcalino-terreux.

2. Procédé selon la revendication 1, caractérisé en ce que le métal alcalino-terreux est le calcium, le baryum, le magnésium ou leurs mélanges.

3. Procédé selon la revendication 1 ou 2, caractérisé en ce que la matière basique est l'hydroxyde de calcium ou de baryum ou un de leurs sels.

5

4. Procédé selon la revendication 1, 2 ou 3, caractérisé en ce que ledit support a un pH de 6,5 à 7,5.

5. Procédé selon l'une quelconque des revendications précédentes, caractérisé en ce que le rapport ammoniac/alcanol/hydrogène est de 10—16/1/0,25—1.

6. Procédé selon l'une quelconque des revendications 1 à 4, caractérisé en ce que le rapport molaire de l'ammoniac à l'alcanol est de 8/1 à 10/1.